# EUROPÄISCHE PATENTSCHRIFT

(11) **EP 3 208 198 B1**
(45) Veröffentlichungstag und Bekanntmachung des Hinweises auf die Patenterteilung: **22.08.2018**
(21) Anmeldenummer: 16155899.4
(22) Anmeldetag: 16.02.2016
(51) Int. Cl.: B64F 1/32, B60P 1/38, B61D 47/00, B64F 1/36, B60P 1/00

(54) **VORRICHTUNG ZUM TRANSPORTIEREN VON GEPÄCKSTÜCKEN**
DEVICE FOR TRANSPORTING LUGGAGE ITEMS
DISPOSITIF DESTINE AU TRANSPORT DE BAGAGES

(43) Veröffentlichungstag der Anmeldung: 23.08.2017
(73) Patentinhaber: Technische Universität Graz, 8010 Graz (AT)
(72) Erfinder: Wolfschluckner, Andreas, 8010 Graz (AT); Fritz, Matthias, 8041 Graz (AT)
(74) Vertreter: KLIMENT & HENHAPEL

(56) Entgegenhaltungen:
- WO-A1-2004/071868
- WO-A1-2010/059024
- DE-A1-102005 020 717
- US-A1- 2008 232 941

## Beschreibung

### GEBIET DER ERFINDUNG

Die vorliegende Erfindung betrifft eine Vorrichtung zum Transportieren von Gepäckstücken, die Vorrichtung umfassend mehrere vertikal übereinander angeordnete Gepäckfächer mit jeweils einem Fachboden.

### STAND DER TECHNIK

Vorrichtungen, insbesondere Transportfahrzeuge, zum Transportieren von Gepäckstücken kommen u.a. auf Flughäfen zum Einsatz, um Gepäckstücke zwischen Terminal und Flugzeug zu transportieren. Das Be- und vor allem Entladen dieser Transportfahrzeuge stellt dabei einen wesentlichen Zeitfaktor dar. Primär wird das Entladen heutzutage manuell durchgeführt, was sehr zeitaufwendig ist.

Dokument DE 10 2005 020 717 A1 zeigt eine bekannte Vorrichtung, die alle Merkmale des Oberbegriffs des Anspruchs 1 offenbart.

Erste automatische Systeme zum Entladen der Gepäckstücke haben sich bislang nicht etablieren können. Aus dem Stand der Technik sind einerseits Systeme bekannt, die sich adaptierter Industrieroboter bedienen, andererseits wurden Systeme vorgeschlagen, bei denen Transportfahrzeuge eingesetzt werden, die als Ganzes angehoben werden, um die Gepäckstücke aus dem jeweiligen Transportfahrzeug zu kippen. In letzterem Fall wurde beispielsweise vorgeschlagen, das Transportfahrzeug mit Gepäckfächern zur Aufnahme der Gepäckstücke auszustatten, welche Gepäckfächer Fachböden mit Rollkörpern aufweisen. Diese Rollkörper sollen das Herausgleiten der Gepäckstücke erleichtern, wenn das Transportfahrzeug verkippt wird. Nachteilig an diesen Systemen ist, dass eine spezielle, aufwendige Infrastruktur mit speziellen Förderbändern und Be- bzw. Entladestationen zur Verfügung gestellt werden muss.

Des Weiteren sind alle bekannten Systeme relativ unflexibel, was die Handhabung sperriger oder übergroßer Gepäckstücke anbelangt, da die Transportfahrzeuge Gepäckfächer aufweisen, die nur eine bestimmte maximale Größe von Gepäckstücken zulassen. Eine Anpassung der Größe der Gepäckfächer an die zu transportierenden Gepäckstücke ist dabei nicht möglich.

### AUFGABE DER ERFINDUNG

Es ist daher Aufgabe der vorliegenden Erfindung, eine Vorrichtung zum Transportieren von Gepäckstücken zur Verfügung zu stellen, die die oben genannten Nachteile vermeidet. Insbesondere soll die erfindungsgemäße Vorrichtung ein einfaches und rasches Entladen der Gepäckstücke ermöglichen, keine besonderen Anpassungen einer vorhandenen Infrastruktur benötigen und die Möglichkeit bieten, auch sperrige oder übergroße Gepäckstücke problemlos zu transportieren.

### DARSTELLUNG DER ERFINDUNG

Zur Lösung der genannten Aufgabenstellung ist es bei einer Vorrichtung zum Transportieren von Gepäckstücken, die Vorrichtung umfassend mehrere vertikal übereinander angeordnete Gepäckfächer mit jeweils einem Fachboden , erfindungsgemäß vorgesehen, dass zumindest einer der Fachböden als zu öffnender Fachboden ausgeführt ist, welcher zu öffnende Fachboden von einem geschlossenen Zustand in einen offenen Zustand und retour überführbar ist, wobei im geschlossenen Zustand Gepäckstücke auf dem zu öffnenden Fachboden anordenbar sind und im offenen Zustand durch eine vom zu öffnenden Fachboden freigegebene Öffnung nach unten aus dem Gepäckfach mittels der Schwerkraft befördert werden können, um das Gepäckfach zu leeren.

Die erfindungsgemäße Vorrichtung weist also Gepäckfächer auf, die in einer vertikalen Richtung gesehen, hintereinander bzw. übereinander angeordnet sind. Jedes Gepäckfach weist einen Fachboden auf, der grundsätzlich dazu ausgelegt ist, dass Gepäckstücke auf diesem platziert werden können. Das Beladen des Gepäckfachs kann dabei z.B. so erfolgen, dass eine Seitenwand, welche das jeweilige Gepäckfach, vorzugsweise alle Gepäckfächer, seitlich begrenzt, beispielsweise durch Hochklappen geöffnet wird und die Gepäckstücke somit von der Seite in des jeweilige Gepäckfach geladen werden. Dabei können die Gepäckstücke z.B. über ein Förderband bis zum bzw. in das Gepäckfach befördert werden, wo sie auf dem Fachboden des Gepäckfachs zu liegen kommen.

Wenn es sich um einen zu öffnenden Fachboden handelt, dann können auf diesem im geschlossenen Zustand Gepäckstücke platziert werden. Wenn nun im geschlossenen Zustand Gepäckstücke auf dem zu öffnenden Fachboden platziert sind und der zu öffnende Fachboden geöffnet bzw. in den offenen Zustand überführt wird, so werden diese Gepäckstücke durch die Schwerkraft nach unten durch die freigegebene Öffnung befördert, vorzugsweise in das direkt darunter liegende Gepäckfach. Die Gepäckstücke werden auf diese Weise aus dem Gepäckfach entladen bzw. wird das Gepäckfach somit entleert.

Durch die vertikale Anordnung der Gepäckfächer kann auf einer relativ kleinen Grundfläche eine relativ große Zahl an Gepäckstücken in der Vorrichtung untergebracht werden. Um eine möglichst große Zahl an Gepäckstücken unterzubringen, ist es bei einer bevorzugten Ausführungsform der erfindungsgemäßen Vorrichtung vorgesehen, dass mehr als zwei, vorzugsweise genau vier, vertikal übereinander angeordnete Gepäckfächer vorgesehen sind. Vier übereinander angeordnete Gepäckfächer gewährleisten in der Praxis einen Stauraum für eine hinreichende Anzahl an Gepäckstücken und stellen gleichzeitig sicher, dass eine Gesamthöhe der Vorrichtung so begrenzt werden kann, dass die Vorrichtung in einer üblicherweise vorhandenen Infrastruktur problemlos eingesetzt werden kann. D.h. übermäßig große, insbesondere übermäßig hohe, Vorrichtungen, die Anpassungen der Infrastruktur erforderlich machen würden, können vermieden werden.

Das Öffnen des zu öffnenden Fachbodens kann auch dazu benutzt werden, um aus dem Gepäckfach, welches den zu öffnenden Fachboden aufweist, und dem direkt darunter angeordneten Gepäckfach ein größeres Gepäckfach zu erzeugen, welches groß genug ist, um ein sperriges oder übergroßes Gepäckstück aufzunehmen. Sollte das größere Gepäckfach für die Aufnahme des sperrigen oder übergroßen Gepäckstücks immer noch zu klein sein, können weitere zu öffnende Fachböden von Gepäckfächern, die direkt unter oder über den beiden Gepäckfächern angeordnet sind, geöffnet werden, um das größere Gepäckfach weiter zu vergrößern. Ein besonders großes Gepäckfach kann erzeugt werden, indem die Fachböden aller Gepäckfächer, die über dem untersten Gepäckfach angeordnet sind, als zu öffnende Fachböden ausgeführt sind und alle zu öffnenden Fachböden geöffnet werden. Um eine große Bandbreite an Dimensionierungen für Gepäckstücke unterschiedlichster Größe sicherstellen zu können, ist es bei einer bevorzugten Ausführungsform der erfindungsgemäßen Vorrichtung vorgesehen, dass die Fachböden aller Gepäckfächer, die über einem untersten Gepäckfach angeordnet sind, als zu öffnende Fachböden ausgeführt sind.

Der zu öffnende Fachboden kann beispielsweise in der Art eines Rollladens ausgeführt sein, der im geschlossenen Zustand im Wesentlichen horizontal verläuft und beim Öffnen zur Seite in Richtung einer Seitenwand gleitet und die Öffnung freigibt. Jene Gepäckstücke, die auf dem zu öffnenden Fachboden angeordnet waren, fallen daher letztlich durch die freigegebene Öffnung. Dabei kann es - je nach konkreter Lage und Platzierung der Gepäckstücke auf dem zu öffnenden Fachboden - vorkommen, dass die Gepäckstücke beim Öffnen zunächst noch auf dem zu öffnenden Fachboden in Richtung Seitenwand mitgeführt werden, bis sie seitlich vom zu öffnenden Fachboden abgestreift werden, insbesondere wenn die Gepäckstücke an der Seitenwand anstoßen.

Um die Fallhöhe zu reduzieren oder ein Fallen gänzlich zu vermeiden, ist es bei einer bevorzugten Ausführungsform der erfindungsgemäßen Vorrichtung vorgesehen, dass der mindestens eine zu öffnende Fachboden mindestens ein Klappenelement umfasst, welches im offenen Zustand gegenüber dem geschlossenen Zustand nach unten verschwenkt ist. Gepäckstücke, die sich auf dem Klappenelement befinden bzw. auf diesem im geschlossenen Zustand angeordnet sind, können somit beim Überführen in den offenen Zustand aufgrund der Schwerkraft auf dem nach unten schwenkenden Klappenelement schräg nach unten und schließlich über eine freie Kante des Klappenelements von diesem gleiten. Im offenen Zustand weist die freie Kante zum Fachboden des darunter liegenden Gepäckfachs. Je nachdem wie groß der Abstand zwischen der freien Kante des Klappenelements im offenen Zustand zum Fachboden des direkt darunterliegenden Gepäckfachs ist und je nach Größe der Gepäckstücke, kann eine Fallhöhe der Gepäckstücke, die im geschlossenen Zustand auf dem Klappenelement angeordnet sind, signifikant reduziert oder sogar im Wesentlichen vermieden werden. D.h. die Gepäckstücke können vom Gepäckfach mit dem zu öffnenden Fachboden in das unmittelbar darunter liegende Gepäckfach befördert werden, ohne dass es zu Beschädigungen der Gepäckstücke kommt.

Um ein besonders rasches Freigeben der Öffnung durch das Verschwenken des mindestens einen Klappenelements zu ermöglichen und so das Gepäckfach besonders rasch leeren zu können, ist es bei einer bevorzugten Ausführungsform der erfindungsgemäßen Vorrichtung vorgesehen, dass der mindestens eine zu öffnende Fachboden genau zwei, vorzugsweise gleich große, Klappenelemente umfasst.

Um eine konstruktiv einfache und mechanisch stabile Ausführung des mindestens einen verschwenkbaren Klappenelements zu gewährleisten, ist es bei einer bevorzugten Ausführungsform der erfindungsgemäßen Vorrichtung vorgesehen, dass das mindestens eine Klappenelement entlang einer Schwenkachse verschwenkbar ist, die parallel zu einer Längsachse des Klappenelements verläuft und im Bereich eines die Öffnung begrenzenden Rands, vorzugsweise im Bereich einer Seitenwand, angeordnet ist. Entsprechend groß kann ein Scharniergelenk in einer Richtung parallel zur Längsachse des Klappenelements dimensioniert werden. Die Anordnung der Schwenkachse bzw. des Scharniergelenks im Bereich des Rands der Öffnung, insbesondere im Bereich der Seitenwand, bewirkt, dass beim Verschwenken des mindestens einen Klappenelements praktisch die gesamte Fläche des zu öffnenden Fachbodens nach unten verschwenkt wird. Somit kann ausgeschlossen werden, dass kleine Gepäckstücke im Bereich des Rands eventuell auf einem Abschnitt des zu öffnenden Fachbodens im Gepäckfach verbleiben und nicht durch die Schwerkraft in das darunter liegende Gepäckfach befördert werden.

Bei einer bevorzugten Ausführungsform der erfindungsgemäßen Vorrichtung ist vorgesehen, dass der Fachboden eines untersten Gepäckfachs mindestens ein Fördermittel, insbesondere ein Förderband, umfasst, um Gepäckstücke in einer Förderrichtung mit einer horizontalen Richtungskomponente aus dem untersten Gepäckfach heraus befördern und so das unterste Gepäckfach leeren zu können. D.h. der Fachboden des untersten Gepäckfachs ist nicht als zu öffnender Fachboden vorgesehen und die Gepäckstücke werden nicht nach unten aus dem untersten Gepäckfach befördert. Stattdessen werden die Gepäckstücke mittels der Fördermittel, bei denen es sich z.B. um angetriebene Rollen oder um eines oder mehrere Förderbänder handeln kann, in einer im Wesentlichen horizontalen Richtung aus dem Gepäckfach befördert. Die Rollen bzw. das mindestens eine Förderband können dabei in an sich bekannter Weise angetrieben sein, insbesondere mittels mindestens eines Elektromotors.

Die Förderrichtung kann insbesondere parallel oder quer zu einer Längsrichtung bzw. zu einer Längsachse des Fachbodens des untersten Gepäckfachs sein. Entsprechend ist es denkbar, eine zu öffnende Front- oder Rückwand oder eine zu öffnende Seitenwand des untersten Gepäckfachs vorzusehen, die beispielsweise hochgeklappt wird, um die Gepäckstücke vorne oder hinten oder seitlich vom untersten Gepäckfach aus diesem heraus zu befördern.

Das Weiterbefördern der Gepäckstücke gestaltet sich sodann denkbar einfach. Insbesondere sind hierfür keine speziellen Infrastrukturmaßnahmen notwendig, da das unterste Gepäckfach üblicherweise eher niedrig bzw. in Bodennähe und jedenfalls nicht in besonders großer Höhe angeordnet ist. Somit können z.B. mobile Förderbänder, wie sie z.B. bei Flughäfen routinemäßig verwendet werden, eingesetzt werden, um die Gepäckstücke vom untersten Gepäckfach weiter zu transportieren, beispielsweise zu einer Ladeluke eines Flugzeugs. Hierbei ist es üblich, dass diese mobilen Förderbänder eine einstellbare Neigung aufweisen, sodass die Gepäckstücke vom Niveau des untersten Gepäckfachs ggf. auf ein höheres Niveau der Ladeluke befördert werden können.

Indem also das unterste Gepäckfach mittels der Fördermittel effizient geleert werden kann bzw. indem die Gepäckstücke aus dem untersten Gepäckfach mittels der Fördermittel effizient entladen werden können, kann im Zusammenspiel mit den zu öffnenden Fachböden der restlichen Gepäckfächer die gesamte erfindungsgemäße Vorrichtung extrem effizient geleert bzw. entladen werden.

Um das Entleeren von zumindest einem Gepäckfach mit einem zu öffnenden Fachboden, vorzugsweise der gesamten Vorrichtung bzw. aller Gepäckfächer der Vorrichtung, steuern und in der Folge automatisieren zu können, ist es bei einer bevorzugten Ausführungsform der erfindungsgemäßen Vorrichtung vorgesehen, dass die Vorrichtung eine Steuereinheit umfasst, mit welcher Steuereinheit mindestens ein Antriebsmittel steuerbar ist, wobei mittels des mindestens einen Antriebsmittels der mindestens eine zu öffnende Fachboden vom geschlossenen Zustand in den offenen Zustand und retour überführbar ist. Als Antriebsmittel können dabei beliebige, an sich aus der Aktorik bekannte Antriebsmittel verwendet werden. Konkrete Beispiele hierfür wären Linearantriebe wie z.B. Hydraulikzylinder, Elektrozylinder und Linearachsen. Weiters wäre aber auch eine Betätigung über Ketten oder Riemen, die durch Elektromotoren, insbesondere Servomotoren, angetrieben werden, denkbar sowie Kombinationen von den genannten Antriebsmitteln.

Die genannten Beispiele eignen sich insbesondere als Antriebsmittel für das mindestens eine Klappenelement, sind aber prinzipiell auch für andere Ausführungen des zu öffnenden Fachbodens geeignet. Für den Fall, dass der zu öffnende Fachboden mindestens ein Klappenelement umfasst, das um eine Schwenkachse verschwenkbar ist, kann z.B. vorgesehen sein, dass die Schwenkachse das Klappenelement in einen ersten Abschnitt und eine zweiten Abschnitt teilt und ein Linearantrieb vorgesehen ist, der am zweiten Abschnitt, insbesondere über einen vom zweiten Abschnitt nach unten abstehenden Fortsatz, angreift. Dabei ist der erste Abschnitt jener, der beim Überführen vom geschlossenen in den offenen Zustand nach unten schwenkt und auf dem die Gepäckstücke im geschlossenen Zustand angeordnet werden können. Der zweite Abschnitt ist jener, der auf der anderen Seite der Schwenkachse angeordnet ist und beim Überführen vom geschlossenen in den offenen Zustand entsprechend nach oben schwenkt.

Um das Entleeren des untersten Gepäckfachs, vorzugsweise der gesamten Vorrichtung bzw. aller Gepäckfächer der Vorrichtung, steuern und in der Folge automatisieren zu können, ist es bei einer bevorzugten Ausführungsform der erfindungsgemäßen Vorrichtung analog vorgesehen, dass mit der Steuereinheit auch das mindestens eine Fördermittel des Fachbodens des untersten Gepäckfachs steuerbar ist.

Um tatsächlich das Entleeren der gesamten Vorrichtung bzw. wirklich aller Gepäckfächer der Vorrichtung steuern und in der Folge automatisieren zu können, ist es bei einer bevorzugten Ausführungsform der erfindungsgemäßen Vorrichtung vorgesehen, dass für jeden zu öffnenden Fachboden ein Antriebsmittel vorgesehen ist, welches jeweils separat mit der Steuereinheit steuerbar ist. Das separate Ansteuern ermöglicht darüberhinaus, beliebige vertikal aufeinander folgende Gepäckfächer zu größeren bzw. einem besonders großen Gepäckfach zusammen zu schließen. Hierzu werden die zu öffnenden Fachböden zwischen jenen Gepäckfächern, die jeweils für die größeren bzw. für das besonders große Gepäckfach vorgesehen sind, mittels der Steuereinheit und der jeweiligen Antriebsmittel in den offenen Zustand überführt.

Um das Entleeren der gesamten Vorrichtung mit der höchstmöglichen Effektivität durchzuführen, ist es bei einer bevorzugten Ausführungsform der erfindungsgemäßen Vorrichtung vorgesehen, dass zum Leeren aller Gepäckfächer die Steuereinheit derart ausgelegt ist, dass beginnend mit dem Gepäckfach, das vertikal unmittelbar über dem untersten Gepäckfach angeordnet ist, vertikal von unten nach oben die Gepäckfächer nacheinander geleert werden, wobei jedes dieser Gepäckfächer erst dann geleert wird, wenn zumindest das unmittelbar darunter liegende Gepäckfach bereits geleert worden ist und dessen zu öffnender Fachboden sich im geschlossenen Zustand befindet, sofern auch das zumindest unmittelbar darunterliegende Gepäckfach einen zu öffnenden Fachboden aufweist.

Das bedeutet, dass zunächst das unterste Gepäckfach geleert wird, falls dieses nicht bereits leer ist. Um auf Nummer sicher zu gehen, können die Fördermittel des Fachbodens des untersten Gepäckfachs jedenfalls solange aktiviert werden, um sicherzustellen, dass sich auf keinen Fall noch Gepäckstücke im untersten Gepäckfach befinden, wenn der zu öffnende Fachboden des darüber liegenden Gepäckfachs geöffnet wird.

Das unterste Gepäckfach bildet eine erste Ebene, das unmittelbar darüber liegende Gepäckfach eine zweite Ebene und ggf. jedes weitere Gepäckfach entsprechend die nächsthöhere - dritte, vierte etc. - Ebene. Nachdem also sichergestellt ist, dass die erste Ebene geleert ist, wird die zweite Ebene geleert, indem der zu öffnende Fachboden vom geschlossenen in den offenen Zustand überführt wird. Anschließend wird dieser zu öffnende Fachboden wieder geschlossen. Gepäckstücke, die ursprünglich in der zweiten Ebene angeordnet waren, befinden sich nun in der ersten Ebene.

Durch Aktivieren der Fördermittel der ersten Ebene werden diese Gepäckstücke aus der ersten Ebene entfernt bzw. wird das unterste Gepäckfach geleert. Vorzugsweise gleichzeitig wird ggf. der zu öffnende Fachboden der dritten Ebene geöffnet, um die dort befindlichen Gepäckstücke in die nun leere zweite Ebene zu befördern, wobei dieser zu öffnende Fachboden sodann wieder geschlossen wird. Da der zu öffnende Fachboden der zweiten Ebene geschlossen ist, ist sichergestellt, dass Gepäckstücke aus der dritten Ebene, wenn überhaupt, dann nur bis zum zu öffnenden Fachboden der zweiten Ebene fallen und somit eine Beschädigung der Gepäckstücke praktisch ausgeschlossen werden kann.

Sobald die erste Ebene geleert ist, können die Gepäckstücke im nächsten Schritt aus der zweiten Ebene durch Öffnen des zu öffnenden Fachbodens der zweiten Ebene in die erste Ebene befördert werden. Vorzugsweise gleichzeitig wird ggf. der zu öffnende Fachboden der vierten Ebene geöffnet, um die dort befindlichen Gepäckstücke in die nun leere dritte Ebene zu befördern, wobei dieser zu öffnende Fachboden sodann vorzugsweise wieder geschlossen wird, um ein erneutes Beladen der vierten Ebene zu ermöglichen. Sofern sich der zu öffnende Fachboden der zweiten Ebene im geschlossenen Zustand befindet, wird anschließend der zu öffnende Fachboden der dritten Ebene geöffnet, um die Gepäckstücke in die zweite Ebene zu befördern, und vorzugsweise sodann wieder verschlossen, um ein erneutes Beladen der dritten Ebene zu ermöglichen.

Sobald die erste Ebene geleert ist, können die Gepäckstücke im nächsten Schritt aus der zweiten Ebene durch Öffnen des zu öffnenden Fachbodens der zweiten Ebene in die erste Ebene befördert werden, wobei der zu öffnende Fachboden der zweiten Ebene sodann vorzugsweise wieder verschlossen wird, um ein erneutes Beladen der zweiten Ebene zu ermöglichen. Sobald schließlich die Gepäckstücke auch aus der ersten Ebene mittels der Fördermittel entladen sind, werden die Fördermittel vorzugsweise gestoppt, um ein erneutes Beladen der ersten Ebene zu ermöglichen.

Bei mehr als vier Ebenen wird das geschilderte Prinzip entsprechend analog angewandt, sodass ein sukzessives Leeren der Ebenen von unten nach oben erfolgt. Dabei wird stets sichergestellt, dass die Gepäckstücke von einer Ebene nur bis zum Fachboden der direkt darunter liegenden Ebene befördert werden, wodurch ein Fallen der Gepäckstücke aus größeren Höhen wirkungsvoll unterbunden wird.

Es versteht sich, dass das geschilderte Entleeren, welches die Gepäckstücke schont, automatisiert - mittels entsprechender, vorzugsweise programmierbarer, Elektronik - ablaufen kann.

Zur Not ist aber natürlich auch ein manuelles Entladen möglich. Hierzu kann einerseits ein manuelles Bedienen der Antriebsmittel und Fördermittel vorgesehen sein. Andererseits kann z.B. über eine zu öffnende Seitenwand, über die beispielsweise das Beladen der Gepäckfächer erfolgt ist, auch ein manuelles Entladen der Gepäckfächer vorgenommen werden.

Um eine besonders sichere Entleerung der gesamten Vorrichtung bzw. aller Gepäckfächer der Vorrichtung zu ermöglichen, ist es bei einer besonders bevorzugten Ausführungsform der erfindungsgemäßen Vorrichtung vorgesehen, dass zum Leeren aller Gepäckfächer die Steuereinheit derart ausgelegt ist, dass jedes dieser Gepäckfächer erst dann geleert wird, wenn alle darunter liegenden Gepäckfächer bereits geleert worden sind. Hierdurch wird ausgeschlossen, dass zu öffnende Fachböden aus höheren Ebenen zu früh geöffnet werden und es zu Kollisionen von Gepäckstücken aus einer höheren Ebene mit Gepäckstücken in einer der darunter liegenden Ebenen kommt.

Grundsätzlich umfasst die erfindungsgemäße Vorrichtung nur vertikal übereinander angeordnete Gepäckfächer. Diese können dabei prinzipiell beliebig breit und lang sein. Je nach Anwendungsfall kann es sich jedoch als günstig erweisen, in jeder Ebene statt eines z.B. besonders breiten Gepäckfachs zwei entsprechend schmälere Gepäckfächer nebeneinander anzuordnen. Dies ist insbesondere dann vorteilhaft, wenn mehrere der übereinander angeordneten Gepäckfächer zu größeren Gepäckfächern bzw. einem besonders großen Gepäckfach in der geschilderten Art und Weise zusammengeschaltet werden, da möglicherweise nur eine gewisse Höhe erzielt werden muss, die Breite der Gepäckfächer durch die betreffenden sperrigen bzw. übergroßen Gepäckstücke jedoch bei weitem nicht voll ausgenutzt wird. Daher ist erfindungsgemäß eine Anordnung von mehreren, vorzugsweise genau zwei, erfindungsgemäßen Vorrichtungen vorgesehen, wobei die Gepäckfächer in mehreren Spalten horizontal nebeneinander und parallel zueinander angeordnet sind, wobei jeweils eine der Spalten durch jeweils eine der Vorrichtungen gebildet ist.

Während des Transports sind die Gepäckstücke eines Gepäckfachs von den Gepäckstücken in den anderen Gepäckfächern der jeweiligen Spalte durch die geschlossenen Fachböden getrennt. Bei mehreren Spalten können Trennwände vorgesehen sein, um eine Separation der Gepäckstücke in jeweils zwei aneinander grenzenden Gepäckfächern aneinander grenzender Spalten sicherzustellen. Durch diese Trennung bzw. Separation der Gepäckstücke wird ein Verhaken und Verhängen beim geschilderten Entladen verhindert.

Die erfindungsgemäße Vorrichtung bzw. Anordnung eignet sich ideal für Transportfahrzeuge, wie sie beispielsweise auf Flughäfen für den Gepäcktransport zwischen Terminal und Flugzeug eingesetzt werden. Entsprechend ist erfindungsgemäß ein Transportfahrzeug umfassend eine erfindungsgemäße Vorrichtung oder eine erfindungsgemäße Anordnung vorgesehen. Beim erfindungsgemäßen Transportfahrzeug kann es sich dabei um einen Anhänger handeln oder um ein aus eigener Kraft fahrendes Fahrzeug. Letzteres kann typischerweise zur Steuerung durch einen Benutzer ausgelegt sein.

Wie bereits gesagt, gestattet die erfindungsgemäße Vorrichtung ein höchst effizientes automatisiertes Entladen der Gepäckstücke, wodurch der Personalaufwand gegenüber bekannten Lösungen grundsätzlich reduziert werden kann. Um den Personalaufwand weiter zu reduzieren, ist es bei einer bevorzugten Ausführungsform des erfindungsgemäßen Transportfahrzeugs vorgesehen, dass es sich bei dem Transportfahrzeug um ein autonom oder teilautonom fahrendes Transportfahrzeug handelt. Insbesondere wenn Routen relativ einfach vorgegeben werden können, wie dies z.B. bei einem Flughafen für den Transport der Gepäckstücke zwischen Terminal und Flugzeug und retour der Fall ist, können autonom fahrende Transportfahrzeuge technisch bereits heutzutage realisiert werden.

Vor allem aus Sicherheits- bzw. Zulassungsgründen können jedoch alternativ auch teilautonome Transportfahrzeuge eingesetzt werden. Solche teilautonomen Transportfahrzeuge haben jedes für sich einen eigenen Antrieb (sind also keine Anhänger im klassischen Sinne) und sind grundsätzlich nicht mechanisch miteinander verbunden. Die teilautonomen Transportfahrzeuge sind dennoch mittels Kommunikationseinrichtungen, insbesondere drahtloser bzw. funkbasierter Kommunikationseinrichtungen, zu einem Zug gekoppelt. Die teilautonomen Transportfahrzeuge können über die Kommunikationseinrichtungen miteinander kommunizieren und folgen einem (derzeit noch) von einem Menschen gelenkten Führungsfahrzeug, das ebenfalls als erfindungsgemäßes Transportfahrzeug ausgelegt sein kann. Die teilautonomen Transportfahrzeuge sind dabei aber sehr wohl in der Lage, einzelne Fahrmanöver autonom durchzuführen (deshalb die Bezeichnung teilautonom). Beispielsweise können die teilautonomen Transportfahrzeuge sich selbständig an Förderbändern oder dafür vorgesehenen Parkpositionen positionieren, was mitunter für einen menschlichen Bediener relativ schwierig wäre.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht einer erfindungsgemäßen Vorrichtung
- Fig. 2: eine vergrößerte Ansicht des Details A aus Fig. 1
- Fig. 3: eine schematische Schnittansicht einer erfindungsgemäßen Anordnung zweier erfindungsgemäßer Vorrichtungen
- Fig. 4: eine schematische axonometrische Ansicht des Aufbaus der Anordnung aus Fig. 3
- Fig. 5: eine axonometrische Ansicht eines erfindungsgemäßen Transportfahrzeugs in Form eines Anhängers, umfassend eine erfindungsgemäße Anordnung wie aus Fig. 3, wobei die Anordnung mit Gepäckstücken beladen wird
- Fig. 6: den Anhänger aus Fig. 5, wobei die Anordnung u.a. mit sperrigen bzw. übergroßen Gepäckstücken beladen ist
- Fig. 7: eine schematische Darstellung des Einsatzes erfindungsgemäßer Transportfahrzeuge beim Beladen eines Flugzeugs
- Fig. 8a bis 8d: eine schematische Illustration des Entladens bzw. Entleerens einer erfindungsgemäßen Vorrichtung, wobei die Vorrichtung Gepäckfächer auf vier übereinander liegenden Ebenen aufweist, die zunächst (Fig. 8a) alle mit Gepäckstücken beladen sind

### WEGE ZUR AUSFÜHRUNG DER ERFINDUNG

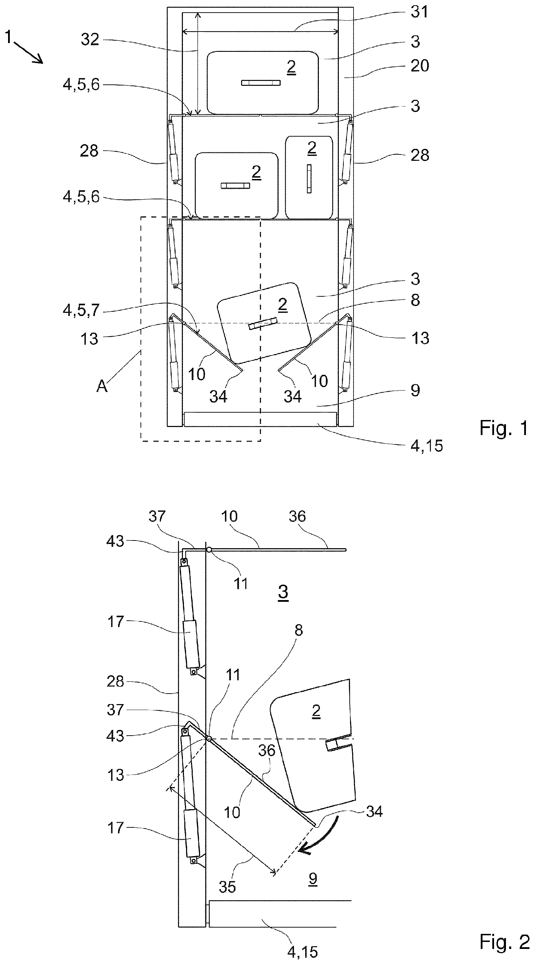

Fig. 1 zeigt in einer schematischen Schnittansicht eine erfindungsgemäße Vorrichtung 1 zum Transportieren von Gepäckstücken 2. Die Vorrichtung 1 weist hierzu vertikal übereinander angeordnete Gepäckfächer 3 auf. In den dargestellten Ausführungsbeispielen sind die Gepäckfächer 3 auf vier übereinander liegenden Ebenen in einem Rahmen 20 angeordnet, wobei ein unterstes Gepäckfach 9 die erste Ebene darstellt und die darüber liegenden Gepäckfächer 3 die zweite, dritte und vierte Ebene. Es versteht sich, dass natürlich grundsätzlich eine beliebige Anzahl von übereinander angeordneten Gepäckfächern 3 bzw. Ebenen vorgesehen sein kann, beispielsweise zwei, drei, fünf, sechs etc.

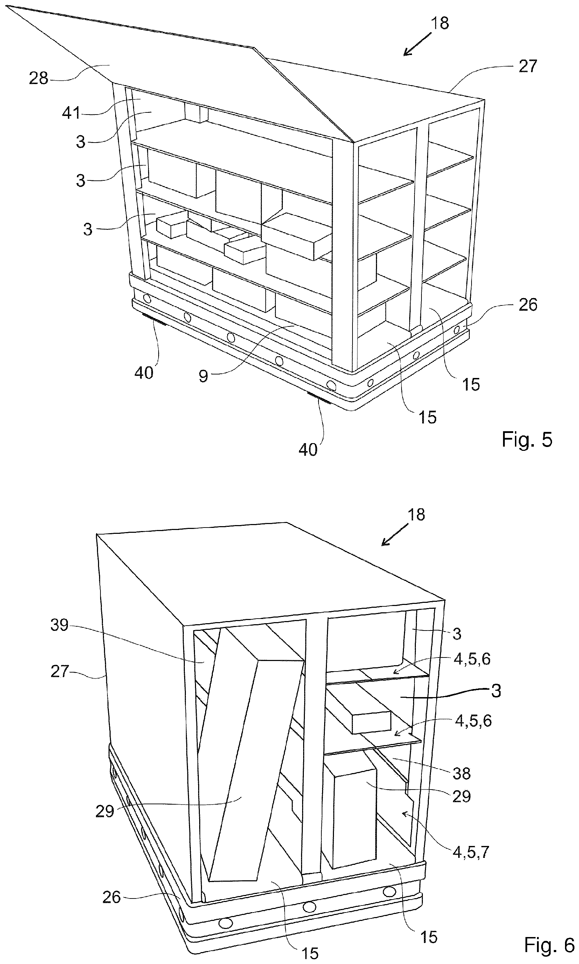

Wie Fig. 1 zu entnehmen ist, sind die Gepäckfächer 3, 9 so dimensioniert, dass Gepäckstücke 2 mit für Reisegepäck, insbesondere Reisekoffer, typischen Abmessungen bequem darin Platz finden. Insbesondere ist eine Breite 31 der Gepäckfächer 3, 9 so gewählt, dass mindestens ein Gepäckstück 2 mit den typischen Abmessungen problemlos auf einem Fachboden 4 des jeweiligen Gepäckfachs 3, 9 angeordnet werden kann. Je nach Orientierung der Gepäckstücke 2 können mitunter auch mehrere Gepäckstücke 2 nebeneinander auf dem jeweiligen Fachboden 4 angeordnet sein. Weiters ist vorzugsweise auch eine Höhe 32 der Gepäckfächer 3, 9 so gewählt, dass ein Gepäckstück 2 mit den typischen Abmessungen problemlos auf dem jeweiligen Fachboden 4 angeordnet werden kann. Zwar ist es dabei nicht ausgeschlossen, dass mehrere Gepäckstücke 2, je nach deren Orientierung, auch übereinander in einem Gepäckfach 3, 9 angeordnet werden können (vgl. Fig. 5), doch ist die Höhe 32 typischerweise nur für eine Lage von Gepäckstücken 2 vorgesehen. Schließlich ist eine Länge 33 der Gepäckfächer 3, 9 so gewählt, dass eine Vielzahl von Gepäckstücken 2 mit den typischen Abmessungen problemlos auf dem jeweiligen Fachboden 4 hintereinander angeordnet werden kann.

Jedes Gepäckfach 3, 9 weist also einen Fachboden 4 auf, der grundsätzlich dafür ausgelegt ist, dass Gepäckstücke 2 auf diesem angeordnet werden können. In den dargestellten Ausführungsbeispielen sind die Fachböden 4 aller über dem untersten Gepäckfach 9 angeordneten Gepäckfächer 3 als zu öffnende Fachböden 5 ausgeführt, die von einem geschlossenen Zustand 6 in einen offenen Zustand 7 und retour überführt werden können. In Fig. 1 sind die zu öffnenden Fachböden 5 der Gepäckfächer 3 der vierten und dritten Ebene im geschlossenen Zustand 6 gezeigt. In diesem geschlossenen Zustand 6 sind die jeweiligen Gepäckstücke 2 auf dem jeweiligen zu öffnenden Fachboden 5 angeordnet. Im offenen Zustand 7 hingegen wird eine Öffnung 8 freigegeben, durch die die Gepäckstücke 2 mittels der Schwerkraft aus dem jeweiligen Gepäckfach 3 nach unten befördert werden, wodurch das jeweilige Gepäckfach 3 geleert wird.

In den dargestellten Ausführungsbeispielen umfassen die zu öffnenden Fachböden 5 jeweils zwei, im Wesentlichen gleich große Klappenelemente 10, welche im offenen Zustand 7 gegenüber dem geschlossenen Zustand 6 nach unten verschwenkt sind. Dabei weist eine freie Kante 34 jedes Klappenelements 10 zum Fachboden 4 des darunter liegenden Gepäckfachs 3.

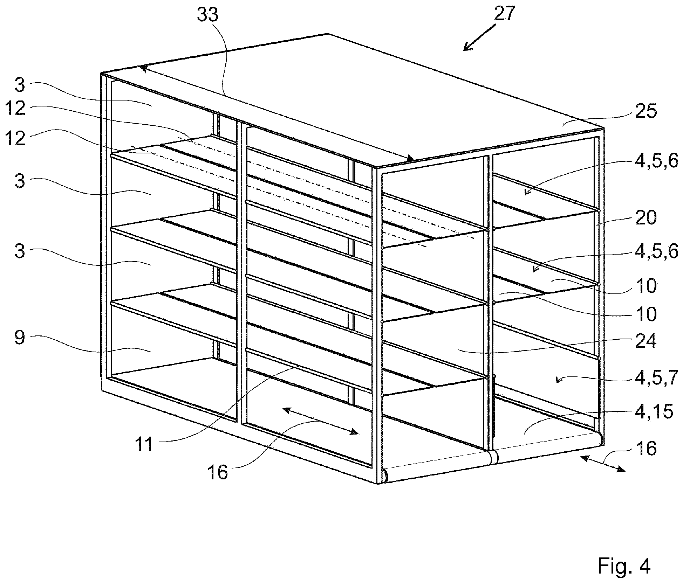

Das Verschwenken jedes Klappenelements 10 geschieht um jeweils eine Schwenkachse 11, die parallel zu einer Längsachse 12 (vgl. Fig. 4) des Klappenelements 10 verläuft und im Bereich eines Rands 13 der Öffnung 8 angeordnet ist. Entsprechend ist am Rand 13 bzw. im Bereich einer Seitenwand 28 der Vorrichtung 1 pro Schwenkachse 11 mindestens ein Scharniergelenk (nicht dargestellt) vorgesehen. Jedes Klappenelement 10 erstreckt sich entlang der Längsachse 12 im Wesentlichen über die gesamte Länge 33 der Gepäckfächer 3, 9. Normal zur Längsachse 12 erstrecken sich die einzelnen Klappenelemente 10 zwischen der Schwenkachse 11 und der freien Kante 34 mit einem Abstand 35 im Wesentlichen über die halbe Breite 31 der Gepäckfächer 3, 9. Entsprechend bilden die beiden Klappenelemente 10 im geschlossenen Zustand 6 im Wesentlichen den gesamten jeweiligen zu öffnenden Fachboden 5. Die im offenen Zustand 7 freigegebene Öffnung 8 wiederum weist im Wesentlichen eine Länge und Breite auf, die der Länge 33 und Breite 31 des jeweiligen Gepäckfachs 3 entsprechen. Somit kann ausgeschlossen werden, dass kleine Gepäckstücke 2 im Bereich des Rands 13 eventuell auf einem Abschnitt des zu öffnenden Fachbodens 5 im Gepäckfach 3 verbleiben und nicht durch die Schwerkraft in das darunter liegende Gepäckfach 3, 9 befördert werden.

Der Abstand 35 zwischen der freien Kante 34 des Klappenelements 10 und der Schwenkachse 11 ist kleiner als die Höhe 32 des darunterliegenden Gepäckfachs 3, sodass das Klappenelement 10 im offenen Zustand 7 im Wesentlichen senkrecht bzw. parallel zur Seitenwand 28 angeordnet ist. Es sei bemerkt, dass die Höhe 32 in den dargestellten Ausführungsbeispielen entsprechend größer als die Hälfte der Breite 31 gewählt ist. Je nachdem wie groß die Differenz zwischen dem Abstand 35 und der Höhe 32 ist, wie gut die Gepäckstücke 2 auf dem Klappenelement 10 gleiten und je nach Größe der Gepäckstücke 2, kann eine Fallhöhe der Gepäckstücke 2, die im geschlossenen Zustand 6 auf dem Klappenelement 10 angeordnet sind, signifikant reduziert oder sogar ganz vermieden werden.

Der zu öffnende Fachboden 5 des Gepäckfachs 3 der zweiten Ebene ist in Fig. 1 in einem Zwischenstadium während der Überführung vom geschlossenen Zustand 6 in den offenen Zustand 7 gezeigt, was in Fig. 2, die eine vergrößerte Ansicht des Details A aus Fig. 1 zeigt, besonders gut erkennbar ist. Der Pfeil in Fig. 2 symbolisiert dabei die Richtung, in der das Klappenelement 10 beim Überführen vom geschlossenen Zustand 6 in den offenen Zustand 7 nach unten verschwenkt wird. Gemäß Fig. 2 gleitet das Gepäckstück 2 während des Überführens vom geschlossenen Zustand 6 in den offenen Zustand 7 aus dem Gepäckfach 3 der zweiten Ebene auf dem nach unten schwenkenden Klappenelement 10 nach unten bis zur freien Kante 34 und fällt anschließend nur eine geringe Distanz auf den Fachboden 4 des darunter liegenden untersten Gepäckfachs 9 der ersten Ebene. Aufgrund der geringen Fallhöhe können so Beschädigungen der Gepäckstücke 2 ausgeschlossen werden.

Jede Schwenkachse 11 unterteilt das jeweilige Klappenelement 10 in einen ersten Abschnitt 36 und eine zweiten Abschnitt 37, wobei sich der erste Abschnitt 36 zwischen der Schwenkachse 11 und der freien Kante 34 mit dem Abstand 35 erstreckt. D.h. der erste Abschnitt 36 schwenkt beim Überführen vom geschlossenen Zustand 6 in den offenen Zustand 7 nach unten. Der zweite Abschnitt 37 schließt auf der gegenüberliegenden Seite der Schwenkachse 11 an den ersten Abschnitt 36 an. Entsprechend schwenkt der zweite Abschnitt 37 beim Überführen vom geschlossenen Zustand 6 in den offenen Zustand 7 nach oben.

Zum Verschwenken der Klappenelemente 10 sind in den dargestellten Ausführungsbeispielen Linearantriebe in Form von doppelwirkenden Hydraulikzylindern 17 vorgesehen, vgl. insbesondere Fig. 2. Die Hydraulikzylinder 17 greifen einerseits an den zweiten Abschnitten 37 über Fortsätze 43, die von den zweiten Abschnitten 37 nach unten abstehen, an, andererseits stützen sie sich am Rahmen 20 ab. In den dargestellten Ausführungsbeispielen sind die Hydraulikzylinder 17 dabei so angeordnet, dass diese von unten gegen den jeweiligen zweiten Abschnitt 37 drücken, um den jeweiligen zweiten Abschnitt 37 nach oben und den jeweiligen ersten Abschnitt 36 entsprechend nach unten zu verschwenken. Umgekehrt werden die zweiten Abschnitte 37 durch Zug der Hydraulikzylinder 17 wieder nach unten verschwenkt und die ersten Abschnitte 36 entsprechend wieder nach oben, um den geschlossenen Zustand 6 wieder herzustellen.

Jedes der Gepäckfächer 3 der zweiten, dritten oder vierten Ebene kann auf die geschilderte Weise, also durch Überführen des jeweiligen zu öffnenden Fachbodens 5 vom geschlossenen Zustand 6 in den offenen Zustand 7, geleert werden. Dabei werden die Gepäckstücke 2 jeweils nach unten in das darunter liegende Gepäckfach 3, 9 befördert. Zum Leeren bzw. Entladen des untersten Gepäckfachs 9 umfasst dessen Fachboden 4 in den dargestellten Ausführungsbeispielen ein Fördermittel in Form eines Förderbands 15 bzw. bildet das Förderband 15 den Fachboden 4 des untersten Gepäckfachs 9. Mittels des Förderbands 15 können die auf diesem befindlichen Gepäckstücke 2 in einer Förderrichtung 16 (vgl. Fig. 4) befördert werden, welche Förderrichtung 16 normal auf die Zeichenebene von Fig. 1 und Fig. 2 steht und in den dargestellten Ausführungsbeispielen im Wesentlichen horizontal verläuft.

Sowohl die Hydraulikzylinder 17 als auch das Förderband 15 sind mit einer Steuereinheit (nicht dargestellt) der Vorrichtung 1 verbunden, die jeden der Hydraulikzylinder 17 sowie das Förderband 15 separat steuern kann. Mittels der Steuereinheit kann somit das Entleeren bzw. Entladen der gesamten Vorrichtung 1 bzw. aller Gepäckfächer 3, 9 der Vorrichtung 1 höchst effektiv und automatisiert durchgeführt werden. Hierzu ist die Steuereinheit derart ausgelegt, dass beginnend mit dem Gepäckfach 3, das vertikal unmittelbar über dem untersten Gepäckfach 9 angeordnet ist, vertikal von unten nach oben die Gepäckfächer 3 nacheinander geleert werden, wobei jedes dieser Gepäckfächer 3 erst dann geleert wird, wenn zumindest das unmittelbar darunter liegende Gepäckfach 3, 9 bereits geleert worden ist und dessen zu öffnender Fachboden 5 sich im geschlossenen Zustand 6 befindet, sofern auch das zumindest unmittelbar darunterliegende Gepäckfach 3 einen zu öffnenden Fachboden 5 aufweist.

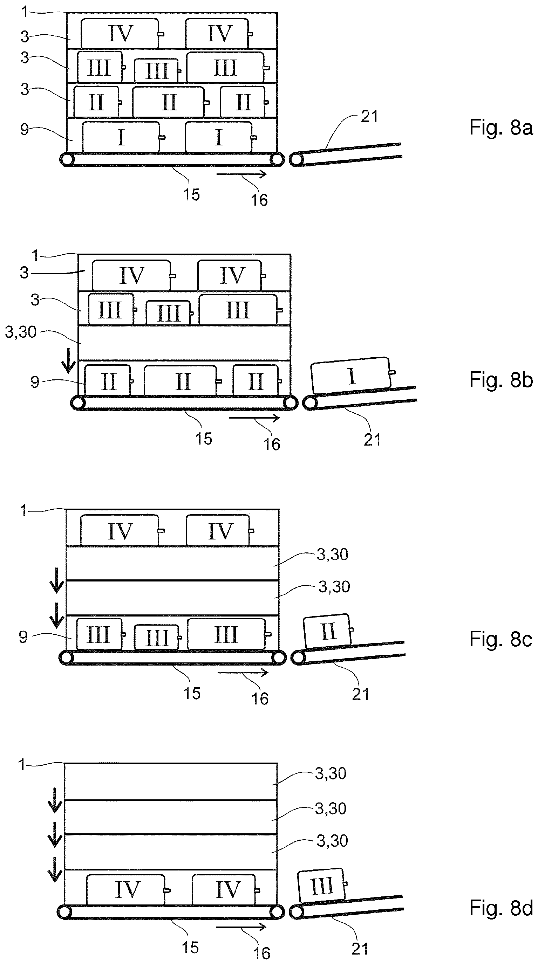

Ein Beispiel für einen solchen Vorgang ist in Fig. 8a bis Fig. 8d illustriert. Im Ausgangszustand, der in Fig. 8a gezeigt ist, sind die Gepäckfächer 3, 9 aller vier Ebenen mit Gepäckstücken gefüllt. Die zu öffnenden Fachböden 5 der Gepäckfächer 3 der zweiten, dritten und vierten Ebene sind im geschlossenen Zustand 6.

Zur besseren Übersicht, sind in Fig. 8a bis Fig. 8d jene Gepäckstücke, die sich im Ausgangszustand in der ersten - also untersten - Ebene befinden, mit "I" beschriftet. Analog sind in Fig. 8a bis Fig. 8d jene Gepäckstücke, die sich im Ausgangszustand in der zweiten Ebene befinden, mit "II" beschriftet, jene Gepäckstücke, die sich im Ausgangszustand in der dritten Ebene befinden, mit "III" und jene Gepäckstücke, die sich im Ausgangszustand in der vierten Ebene befinden, mit "IV".

Zunächst wird das unterste Gepäckfach 9 geleert, indem mittels des Förderbands 15 die Gepäckstücke I in Förderrichtung 16 aus dem untersten Gepäckfach 9 heraus befördert werden. Hierzu ist eine zu öffnende Frontwand (nicht dargestellt) geöffnet oder es ist gar keine Frontwand vorgesehen, um den Übertritt vom untersten Gepäckfach 9 nach außen zu ermöglichen. In Fig. 8a bis 8d ist ein mobiles Förderband 21, wie es z.B. bei Flughäfen eingesetzt wird, außen angeordnet und schließt in Förderrichtung 16 gesehen an das Förderband 15 an. Entsprechend werden jene Gepäckstücke, die mittels des Förderbands 15 aus dem untersten Gepäckfach heraus befördert werden, mittels des mobilen Förderbands 21 weiter, von der Vorrichtung 1 weg befördert.

Das Förderband 15 ist jedenfalls solange aktiviert, bis sich kein Gepäckstück I mehr im untersten Gepäckfach 9 befindet. Nachdem sichergestellt ist, dass die erste Ebene bzw. das unterste Gepäckfach 9 geleert ist, wird die zweite Ebene bzw. das Gepäckfach 3 der zweiten Ebene geleert, indem der zu öffnende Fachboden 5 vom geschlossenen Zustand 6 in den offenen Zustand 7 überführt wird. Anschließend wird dieser zu öffnende Fachboden 5 wieder geschlossen. Die Gepäckstücke II, die ursprünglich in der zweiten Ebene angeordnet waren, befinden sich nun in der ersten Ebene. Die zweite Ebene ist geleert, d.h. das Gepäckfach 3 der zweiten Ebene ist nun ein geleertes Gepäckfach 30. Dies ist in Fig. 8b dargestellt, wobei der Übergang der Gepäckstücke II von der zweiten Ebene auf die erste Ebene durch einen Pfeil angedeutet ist. Auf dem mobilen Förderband 21 ist noch ein Gepäckstück I, das von der Vorrichtung 1 weg transportiert wird, zu erkennen.

Durch Aktivieren des Förderbands 15 (falls dieses zwischenzeitlich gestoppt wurde) werden die Gepäckstücke II aus der ersten Ebene entfernt bzw. wird das unterste Gepäckfach 9 geleert. Vorzugsweise gleichzeitig wird der zu öffnende Fachboden 5 des Gepäckfachs 3 der dritten Ebene geöffnet, um die in diesem Gepäckfach 3 befindlichen Gepäckstücke III in das nun leere Gepäckfach 3 der zweiten Ebene zu befördern, wobei dieser zu öffnende Fachboden 5 sodann wieder geschlossen wird. Da der zu öffnende Fachboden 5 der zweiten Ebene geschlossen ist, ist sichergestellt, dass die Gepäckstücke III, wenn überhaupt, dann nur bis zum zu öffnenden Fachboden 5 des Gepäckfachs 3 der zweiten Ebene fallen und somit eine Beschädigung der Gepäckstücke III praktisch ausgeschlossen werden kann.

Sobald die erste Ebene geleert ist, können die Gepäckstücke III im nächsten Schritt aus der zweiten Ebene durch Öffnen des zu öffnenden Fachbodens 5 des Gepäckfachs 3 der zweiten Ebene in die erste Ebene befördert werden. Sodann wird der zu öffnende Fachboden des Gepäckfachs 3 der zweiten Ebene wieder verschlossen. Diese Situation ist in Fig. 8c dargestellt, wobei der Übergang der Gepäckstücke III von der dritten Ebene auf die erste Ebene durch zwei Pfeile angedeutet ist. Entsprechend ist also nun auch das Gepäckfach 3 der dritten Ebene ein geleertes Gepäckfach 30. Auf dem mobilen Förderband 21 ist noch ein Gepäckstück II, das von der Vorrichtung 1 weg transportiert wird, zu erkennen.

Durch Aktivieren des Förderbands 15 (falls dieses zwischenzeitlich gestoppt wurde) werden die Gepäckstücke III aus der ersten Ebene entfernt bzw. wird das unterste Gepäckfach 9 geleert. Vorzugsweise gleichzeitig wird der zu öffnende Fachboden 5 der vierten Ebene geöffnet, um die dort befindlichen Gepäckstücke IV in die nun leere dritte Ebene zu befördern, wobei dieser zu öffnende Fachboden 5 sodann wieder geschlossen wird, um ein erneutes Beladen des Gepäckfachs 3 der vierten Ebene zu ermöglichen. Da der zu öffnende Fachboden 5 der dritten Ebene geschlossen ist, ist sichergestellt, dass die Gepäckstücke IV, wenn überhaupt, dann nur bis zum zu öffnenden Fachboden 5 des Gepäckfachs 3 der dritten Ebene fallen und somit eine Beschädigung der Gepäckstücke IV praktisch ausgeschlossen werden kann.

Sofern sich der zu öffnende Fachboden 5 der zweiten Ebene im geschlossenen Zustand 6 befindet, wird nun der zu öffnende Fachboden 5 der dritten Ebene geöffnet, um die Gepäckstücke IV in die zweite Ebene zu befördern, und vorzugsweise sodann wieder verschlossen, um ein erneutes Beladen der dritten Ebene zu ermöglichen. Da der zu öffnende Fachboden 5 der zweiten Ebene geschlossen ist, ist sichergestellt, dass die Gepäckstücke IV, wenn überhaupt, dann nur bis zum zu öffnenden Fachboden 5 des Gepäckfachs 3 der zweiten Ebene fallen und somit eine Beschädigung der Gepäckstücke IV praktisch ausgeschlossen werden kann.

Sobald die erste Ebene geleert ist, können die Gepäckstücke IV im nächsten Schritt aus der zweiten Ebene durch Öffnen des zu öffnenden Fachbodens 5 der zweiten Ebene in die erste Ebene befördert werden, wobei der zu öffnende Fachboden 5 der zweiten Ebene sodann vorzugsweise wieder verschlossen wird, um ein erneutes Beladen der zweiten Ebene zu ermöglichen. Diese Situation ist in Fig. 8d dargestellt, wobei der Übergang der Gepäckstücke IV von der vierten Ebene auf die erste Ebene durch drei Pfeile angedeutet ist. Entsprechend ist also nun auch das Gepäckfach 3 der vierten Ebene ein geleertes Gepäckfach 30. Auf dem mobilen Förderband 21 ist noch ein Gepäckstück III, das von der Vorrichtung 1 weg transportiert wird, zu erkennen.

Sobald schließlich auch die Gepäckstücke IV aus der ersten Ebene mittels des Förderbands 15 befördert sind, ist die gesamte Vorrichtung 1 geleert und wird das Förderband 15 gestoppt, um ein erneutes Beladen des untersten Gepäckfachs 9 bzw. der Vorrichtung 1 zu ermöglichen.

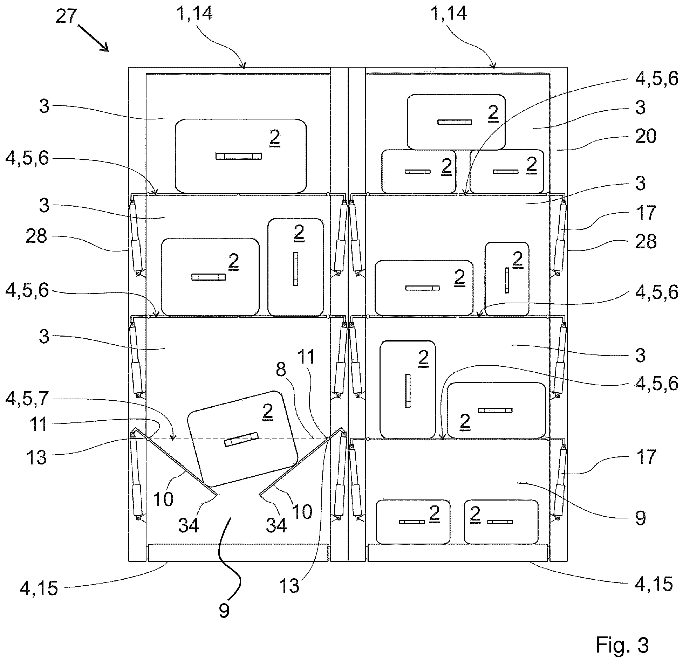

Erfindungsgemäß können mehrere Vorrichtungen 1 zu einer Anordnung 27 kombiniert werden, indem die Vorrichtungen so nebeneinander angeordnet werden, dass die Gepäckfächer 3, 9 in mehreren Spalten 14 horizontal nebeneinander und parallel zueinander angeordnet sind, wobei jeweils eine der Spalten 14 durch eine der Vorrichtungen 1 gebildet ist. Fig. 3 zeigt eine solche Anordnung 27, die zwei Spalten 14 umfasst, in einer Schnittansicht analog zu Fig. 1. Da gleiche Elemente mit gleichen Bezugszeichen versehen sind und die gleiche Funktion erfüllen, wird auf eine detailliertere Beschreibung an dieser Stelle verzichtet und auf das oben zur Vorrichtung 1 Gesagte verwiesen.

In Fig. 4, die eine schematische axonometrische Ansicht des Aufbaus der Anordnung 27 aus Fig. 3 zeigt, ist erkennbar, dass Trennwände 24 vorgesehen sind, um eine Separation der Gepäckstücke 2 in jeweils zwei aneinander grenzenden Gepäckfächern 3 der aneinander grenzenden Spalten 14 sicherzustellen. Durch diese Trennung bzw. Separation der Gepäckstücke 2 wird ein Verhaken und Verhängen beim geschilderten Entladen bzw. Entleeren der Vorrichtungen 1 verhindert. Aus Gründen der Klarheit sind Seitenwände 28, mögliche Frontwände, Rückwände 41 (vgl. Fig. 5) sowie die zweiten Abschnitte 37 und die an diesen angreifenden Hydraulikzylinder 17 in Fig. 4 nicht dargestellt. Nach oben hin wird die Anordnung 27 durch eine Deckplatte 25, welche am Rahmen 20 montiert ist, abgeschlossen.

Es kann für jede Vorrichtung 1 der Anordnung 27 eine eigene Steuereinheit vorgesehen sein oder eine Steuereinheit für alle Vorrichtungen 1 der Anordnung 27. Dabei sind vorzugsweise alle Hydraulikzylinder 17 und Förderbänder 15 der Vorrichtungen 1 mittels der Steuereinheiten oder der einen Steuereinheit separat ansteuerbar.

Das separate Ansteuern der Hydraulikzylinder 17 durch die Steuereinheit ermöglicht es außerdem, beliebige vertikal aufeinander folgende Gepäckfächer 3,9 zu größeren Gepäckfächern 38 oder alle vertikal aufeinander folgenden Gepäckfächer 3, 9 zu einem besonders großen Gepäckfach 39 zusammen zu schließen. D.h. die größeren Gepäckfächer 38 bzw. das besonders große Gepäckfach 39 weisen jeweils eine Höhe auf, die ein Vielfaches der Höhe 32 eines einzelnen Gepäckfachs 3, 9 ist. Dies ist in Fig. 6 illustriert.

In der Darstellung der Fig. 6 sind sämtliche Klappenelemente 10 der linken Vorrichtung 1 der Anordnung 27 nach unten verschwenkt, sodass die Gepäckfächer 3, 9 aller vier Ebenen zu einem besonders großen Gepäckfach 39 zusammengeschlossen sind. Dieses besonders große Gepäckfach 39 dient zur Aufnahme eines sperrigen Gepäckstücks 29. Bei der rechten Vorrichtung 1 der Anordnung 27 sind nur die Klappenelemente 10 des Gepäckfachs 3 der zweiten Ebene nach unten verschwenkt, sodass dieses Gepäckfach 3 und das unterste Gepäckfach 9 ein größeres Gepäckfach 38 ausbilden. Im größeren Gepäckfach 38 ist ebenfalls ein sperriges Gepäckstück 29 angeordnet.

In Fig. 6 ist die Anordnung 27 auf einer Fahreinheit 26 angeordnet und bildet mit dieser ein erfindungsgemäßes Transportfahrzeug in Form eines Anhängers 18. Die Fahreinheit 26 umfasst in an sich bekannter Weise ein Fahrwerk (nicht dargestellt) und Räder 40 (vgl. Fig. 5) und bildet eine Art Plattform aus, auf der die Anordnung 27 befestigbar ist.

Es sei bemerkt, dass der Anhänger 18 auch als teilautonomes Transportfahrzeug ausgelegt sein kann. In diesem Fall weist die Fahreinheit 26 außerdem einen entsprechenden Antrieb, der beispielsweise mindestens einen Elektromotor und/oder mindestens einen Verbrennungsmotor umfasst, auf. Solche teilautonomen Transportfahrzeuge brauchen nicht - im Gegensatz zu klassischen Anhängern - mechanisch gekoppelt zu werden. Stattdessen sind Kommunikationseinrichtungen (nicht dargestellt), insbesondere drahtlose bzw. funkbasierte Kommunikationseinrichtungen, in den Fahreinheiten 26 vorgesehen, um die teilautonomen Transportfahrzeuge zu einem Zug koppeln zu können. Die teilautonomen Transportfahrzeuge können über die Kommunikationseinrichtungen miteinander kommunizieren und so einem (derzeit noch) von einem Menschen gelenkten Führungsfahrzeug folgen, das ebenfalls als erfindungsgemäßes Transportfahrzeug ausgelegt sein kann. Die teilautonomen Transportfahrzeuge sind dabei aber sehr wohl in der Lage, einzelne Fahrmanöver autonom durchzuführen.

Fig. 5 zeigt einen Anhänger 18 analog zu Fig. 6, wobei jedoch keine Gepäckfächer 3, 9 zu größeren Gepäckfächern 38 oder gar zu einem besonders großen Gepäckfach 39 zusammengeschlossen sind. In Fig. 5 ist illustriert, dass eine Beladung der Gepäckfächer 3, 9 erfolgen kann, indem die Seitenwand 28 hochgeklappt wird und die Gepäckstücke 2 von der Seite in die Gepäckfächer 3, 9 eingebracht werden. Dies kann z.B. mittels mobiler Förderbänder 21 erfolgen, die in der Höhe verstellbar sind und so die Gepäckstücke 2 auf das Niveau des Gepäckfachs 3, 9 der jeweiligen Ebene befördern können. Selbstverständlich ist aber auch ein manuelles Beladen möglich. Beim Anhänger 18 der Fig. 5 und Fig. 6 weisen Vorrichtungen 1 bzw. die Anordnung 27 nur eine Rückwand 41, aber keine Frontwand auf, um ein problemloses Entladen der Gepäckstücke 2 bzw. sperrigen Gepäckstücke 29, die auf den Förderbändern 15 angeordnet sind, mittels der Förderbänder 15 zu ermöglichen.

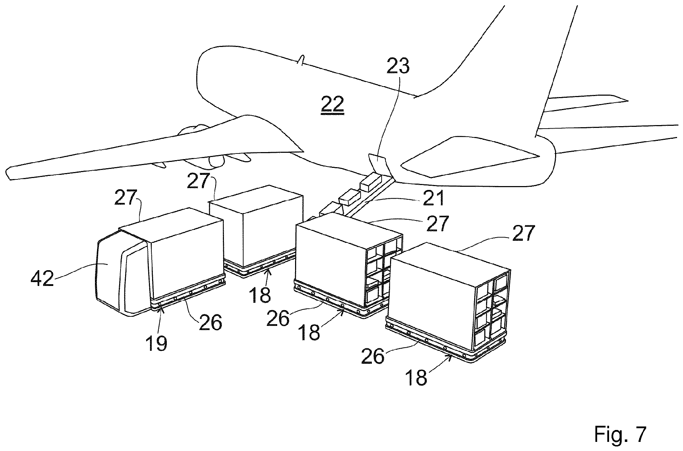

Fig. 7 zeigt eine schematische Darstellung des Einsatzes der erfindungsgemäßen Anhänger 18 beim Beladen eines Flugzeugs 22 auf einem Flughafen. Die Anhänger 18 werden von einem erfindungsgemäßen Zugfahrzeug 19, das ebenfalls mit einer erfindungsgemäßen Anordnung 27 ausgerüstet ist, zum Flugzeug 22, insbesondere in die Nähe einer Ladeluke 23 des Flugzeugs 22, gezogen. Das Zugfahrzeug 19 weist ebenfalls eine Fahreinheit 26 auf, welche außerdem mit einem entsprechenden Antrieb, der beispielsweise mindestens einen Elektromotor und/oder mindestens einen Verbrennungsmotor umfasst, ausgerüstet ist.

Die Gepäckstücke 2 können, wie oben beschrieben, aus sämtlichen Gepäckfächern 3, 9 des Zugfahrzeugs 19 und der Anhänger 18 entladen werden. Falls nicht alle Gepäckstücke 2 für dieses Flugzeug 22 bestimmt sind, kann es natürlich auch vorgesehen sein, nur die Gepäckfächer 3 des Zugfahrzeugs 19 und/oder eines oder mehrerer der Anhänger 18 auf die oben beschriebene Art und Weise zu entleeren. Dabei werden die Gepäckstücke 2 mittels eines mobilen Förderbands 21 vom jeweils untersten Gepäckfach 9 weg und zur Ladeluke 23, die auf einem höheren Niveau als das unterste Gepäckfach 9 angeordnet ist, befördert.

Im dargestellten Ausführungsbeispiel der Fig. 7 weist das Zugfahrzeug 19 eine Fahrerkabine 42 für eine Person auf, die das Zugfahrzeug 19 steuert.

Die Anhänger 18 sind vorzugsweise als teilautonome Transportfahrzeuge ausgelegt und untereinander sowie mit dem Zugfahrzeug 19 über Kommunikationseinrichtungen, insbesondere drahtlose bzw. funkbasierte Kommunikationseinrichtungen, in den Fahreinheiten 26 zu einem Zug gekoppelt. Das Ziehen der Anhänger 18 durch das Zugfahrzeug 19 erfolgt in diesem Fall nicht mechanisch, sondern die teilautonomen Transportfahrzeuge können über die Kommunikationseinrichtungen miteinander und mit dem Zugfahrzeug 19 kommunizieren und so dem Zugfahrzeug 19 folgen. Die teilautonomen Transportfahrzeuge sind dabei in der Lage, einzelne Fahrmanöver autonom durchzuführen. Insbesondere können die Anhänger 18 sich selbständig in einer für das Entladen geeigneten Position beim mobilen Förderband 21 positionieren.

Grundsätzlich können das Zugfahrzeug 19 sowie die Anhänger 18 auch als autonom fahrende Fahrzeuge konzipiert sein, um einen besonders hohen Automationsgrad zu erzielen. Vor allem aus Sicherheits- bzw. Zulassungsgründen bieten sich jedoch der Einsatz eines Zugfahrzeugs 19 mit mechanisch angekoppelten Anhängern 18 oder der Einsatz eines Zugfahrzeugs 19 mit Anhängern 18, die als teilautonome Transportfahrzeuge ausgelegt sind, an.

### BEZUGSZEICHENLISTE

- 1: Vorrichtung zum Transportieren von Gepäckstücken
- 2: Gepäckstück
- 3: Gepäckfach
- 4: Fachboden
- 5: Zu öffnender Fachboden
- 6: Geschlossener Zustand des zu öffnenden Fachbodens
- 7: Offener Zustand des zu öffnenden Fachbodens
- 8: Öffnung
- 9: Unterstes Gepäckfach
- 10: Klappenelement
- 11: Schwenkachse
- 12: Längsachse des Klappenelements
- 13: Rand der Öffnung
- 14: Spalte von Gepäckfächern
- 15: Förderband
- 16: Förderrichtung
- 17: Doppelwirkender Hydraulikzylinder
- 18: Anhänger
- 19: Kraftfahrzeug
- 20: Rahmen
- 21: Mobiles Förderband
- 22: Flugzeug
- 23: Ladeluke
- 24: Trennwand
- 25: Deckplatte
- 26: Fahreinheit
- 27: Anordnung mehrerer Vorrichtungen
- 28: Seitenwand
- 29: Sperriges Gepäckstück
- 30: Geleertes Gepäckfach
- 31: Breite des Gepäckfachs
- 32: Höhe des Gepäckfachs
- 33: Länge des Gepäckfachs
- 34: Freie Kante des Klappenelements
- 35: Abstand zwischen der Schwenkachse und der freien Kante
- 36: Erster Abschnitt des Klappenelements
- 37: Zweiter Abschnitt des Klappenelements
- 38: Größeres Gepäckfach
- 39: Besonders großes Gepäckfach
- 40: Rad
- 41: Rückwand
- 42: Fahrerkabine
- 43: Fortsatz des zweiten Abschnitts

## Patentansprüche

1. Vorrichtung (1) zum Transportieren von Gepäckstücken (2), die Vorrichtung (1) umfassend mehrere vertikal übereinander angeordnete Gepäckfächer (3) mit jeweils einem Fachboden (4), **dadurch gekennzeichnet, dass** zumindest einer der Fachböden (4) als zu öffnender Fachboden (5) ausgeführt ist, welcher zu öffnende Fachboden (5) von einem geschlossenen Zustand (6) in einen offenen Zustand (7) und retour überführbar ist, wobei im geschlossenen Zustand (6) Gepäckstücke (2) auf dem zu öffnenden Fachboden (5) anordenbar sind und im offenen Zustand (7) durch eine vom zu öffnenden Fachboden (5) freigegebene Öffnung (8) nach unten aus dem Gepäckfach (3) mittels der Schwerkraft befördert werden können, um das Gepäckfach (3) zu leeren.

2. Vorrichtung (1) nach Anspruch 1, **dadurch gekennzeichnet, dass** mehr als zwei, vorzugsweise genau vier, vertikal übereinander angeordnete Gepäckfächer (3) vorgesehen sind.

3. Vorrichtung (1) nach einem der Ansprüche 1 bis 2, **dadurch gekennzeichnet, dass** die Fachböden (4) aller Gepäckfächer (3), die über einem untersten Gepäckfach (9) angeordnet sind, als zu öffnende Fachböden (5) ausgeführt sind.

4. Vorrichtung (1) nach einem der Ansprüche 1 bis 3, **dadurch gekennzeichnet, dass** der mindestens eine zu öffnende Fachboden (5) mindestens ein Klappenelement (10) umfasst, welches im offenen Zustand (7) gegenüber dem geschlossenen Zustand (6) nach unten verschwenkt ist.

5. Vorrichtung (1) nach Anspruch 4, **dadurch gekennzeichnet, dass** der mindestens eine zu öffnende Fachboden (5) genau zwei, vorzugsweise gleich große, Klappenelemente (10) umfasst.

6. Vorrichtung nach einem der Ansprüche 4 bis 5, **dadurch gekennzeichnet, dass** das mindestens eine Klappenelement (10) entlang einer Schwenkachse (11) verschwenkbar ist, die parallel zu einer Längsachse (12) des Klappenelements (10) verläuft und im Bereich eines die Öffnung (8) begrenzenden Rands (13), vorzugsweise im Bereich einer Seitenwand (28), angeordnet ist.

7. Vorrichtung (1) nach einem der Ansprüche 1 bis 6, **dadurch gekennzeichnet, dass** der Fachboden (3) eines untersten Gepäckfachs (9) mindestens ein Fördermittel, insbesondere ein Förderband (15), umfasst, um Gepäckstücke (2) in einer Förderrichtung (16) mit einer horizontalen Richtungskomponente aus dem untersten Gepäckfach (9) heraus befördern und so das unterste Gepäckfach (9) leeren zu können.

8. Vorrichtung (1) nach einem der Ansprüche 1 bis 7, **dadurch gekennzeichnet, dass** die Vorrichtung (1) eine Steuereinheit umfasst, mit welcher Steuereinheit mindestens ein Antriebsmittel (17) steuerbar ist, wobei mittels des mindestens einen Antriebsmittels (17) der mindestens eine zu öffnende Fachboden (5) vom geschlossenen Zustand (6) in den offenen Zustand (7) und retour überführbar ist.

9. Vorrichtung nach Anspruch 8, sofern abhängig von Anspruch 7, **dadurch gekennzeichnet, dass** mit der Steuereinheit auch das mindestens eine Fördermittel (15) des Fachbodens (3) des untersten Gepäckfachs (9) steuerbar ist.

10. Vorrichtung (1) nach einem der Ansprüche 8 bis 9, **dadurch gekennzeichnet, dass** für jeden zu öffnenden Fachboden (5) ein Antriebsmittel (17) vorgesehen ist, welches jeweils separat mit der Steuereinheit steuerbar ist.

11. Vorrichtung nach Anspruch 10, sofern abhängig von Anspruch 9 und Anspruch 3, **dadurch gekennzeichnet, dass** zum Leeren aller Gepäckfächer (3) die Steuereinheit derart ausgelegt ist, dass beginnend mit dem Gepäckfach (3), das vertikal unmittelbar über dem untersten Gepäckfach (9) angeordnet ist, vertikal von unten nach oben die Gepäckfächer (3) nacheinander geleert werden, wobei jedes dieser Gepäckfächer (3) erst dann geleert wird, wenn zumindest das unmittelbar darunter liegende Gepäckfach (3, 9) bereits geleert worden ist und dessen zu öffnender Fachboden (5) sich im geschlossenen Zustand befindet, sofern auch das zumindest unmittelbar darunterliegende Gepäckfach (3, 9) einen zu öffnenden Fachboden (5) aufweist.

12. Vorrichtung nach Anspruch 11, **dadurch gekennzeichnet, dass** zum Leeren aller Gepäckfächer (3) die Steuereinheit derart ausgelegt ist, dass jedes dieser Gepäckfächer (3) erst dann geleert wird, wenn alle darunter liegenden Gepäckfächer (3, 9) bereits geleert worden sind.

13. Anordnung (27) von mehreren, vorzugsweise genau zwei, Vorrichtungen (1) nach einem der Ansprüche 1 bis 12, wobei die Gepäckfächer (3) in mehreren Spalten (14) horizontal nebeneinander und parallel zueinander angeordnet sind, wobei jeweils eine der Spalten (14) durch jeweils eine der Vorrichtungen (1) gebildet ist.

14. Transportfahrzeug (18, 19) umfassend eine Vorrichtung (1) nach einem der Ansprüche 1 bis 12 oder eine Anordnung (27) nach Anspruch 13.

15. Transportfahrzeug (19) nach Anspruch 14, **dadurch gekennzeichnet, dass** es sich bei dem Transportfahrzeug (19) um ein autonom oder teilautonom fahrendes Transportfahrzeug handelt.

## Claims

1. A device (1) for transporting pieces of luggage (2), the device (1) comprising multiple luggage compartments (3) arranged vertically one over another each having a compartment bottom (4), **characterized in that** at least one of the compartment bottoms (4) is embodied as a compartment bottom (5) to be opened, which compartment bottom (5) to be opened is transferable from a closed state (6) into an open state (7) and vice versa, wherein in the closed state (6), pieces of luggage (2) can be arranged on the compartment bottom (5) to be opened and, in the open state (7), they can be conveyed downward through an opening (8) released by the compartment bottom (5) to be opened out of the luggage compartment (3) by means of gravity, in order to empty the luggage compartment (3).

2. The device (1) according to Claim 1, **characterized in that** more than two, preferably precisely four luggage compartments (3) arranged vertically one over another are provided.

3. The device (1) according to any one of Claims 1 to 2, **characterized in that** the compartment bottoms (4) of all luggage compartments (3) which are arranged above a lowermost luggage compartment (9) are embodied as compartment bottoms (5) to be opened.

4. The device (1) according to any one of Claims 1 to 3, **characterized in that** the at least one compartment bottom (5) to be opened comprises at least one flap element (10), which is pivoted downward in the open state (7) in relation to the closed state (6).

5. The device (1) according to Claim 4, **characterized in that** the at least one compartment bottom (5) to be opened comprises precisely two flap elements (10), preferably of equal size.

6. The device (1) according to any one of Claims 4 to 5, **characterized in that** the at least one flap element (10) is pivotable along a pivot axis (11), which extends parallel to a longitudinal axis (12) of the flap element (10) and is arranged in the region of a border (13) delimiting the opening (8), preferably in the region of a side wall (28).

7. The device (1) according to any one of Claims 1 to 6, **characterized in that** the compartment bottom (4) of a lowermost luggage compartment (9) comprises at least one conveyor means, in particular a conveyor belt (15), in order to convey pieces of luggage (2) in a conveyance direction (16) having a horizontal directional component out of the lowermost luggage compartment (9) and thus be able to empty the lowermost luggage compartment (9).

8. The device (1) according to any one of Claims 1 to 7, **characterized in that** the device (1) comprises a control unit, using which control unit at least one drive means (17) is controllable, wherein by means of the at least one drive means (17), the at least one compartment bottom (5) to be opened is transferable from the closed state (6) into the open state (7) and vice versa.

9. The device (1) according to Claim 8, insofar as it is dependent on Claim 7, **characterized in that** the at least one conveyor means (15) of the compartment bottom (4) of the lowermost luggage compartment (9) is also controllable using the control unit.

10. The device (1) according to any one of Claims 8 to 9, **characterized in that** a drive means (17), which is respectively separately controllable using the control unit, is provided for each compartment bottom (5) to be opened.

11. The device (1) according to Claim 10, insofar as it is dependent on Claim 9 and Claim 3, **characterized in that**, to empty all luggage compartments (3), the control unit is designed such that beginning with the luggage compartment (3) which is arranged vertically directly above the lowermost luggage compartment (9), the luggage compartments (3) are emptied in succession vertically from bottom to top, wherein each of these luggage compartments (3) is only emptied when at least the luggage compartment (3, 9) located directly below it has already been emptied and its compartment bottom (5) to be opened is in the closed state, if at least the luggage compartment (3, 9) located directly underneath also has a compartment bottom (5) to be opened.

12. The device (1) according to Claim 11, **characterized in that**, to empty all luggage compartments (3), the control unit is designed such that each of these luggage compartments (3) is only emptied when all luggage compartments (3, 9) located underneath it have already been emptied.

13. An arrangement (27) of multiple, preferably precisely two devices (1) according to any one of Claims 1 to 12, wherein the luggage compartments (3) are arranged in multiple columns (14) horizontally adjacent to one another and parallel to one another, wherein each one of the columns (14) is formed by respectively one of the devices (1).

14. A transportation vehicle (18, 19) comprising a device (1) according to any one of Claims 1 to 12 or an arrangement (27) according to Claim 13.

15. The transportation vehicle (19) according to Claim 14, **characterized in that** the transportation vehicle (19) is an autonomously or partially autonomously driving transportation vehicle.

## Revendications

1. Dispositif (1) pour le transport de bagages (2), le dispositif (1) comprenant plusieurs compartiments à bagages (3) disposés verticalement l'un au-dessus de l'autre et comportant chacun une tablette (4), **caractérisé en ce qu'**au moins une des tablettes (4) est réalisée sous la forme d'une tablette ouvrante (5), laquelle tablette ouvrante (5) peut être transférée d'un état fermé (6) à un état ouvert (7) et inversement, dans lequel, à l'état fermé (6), des bagages (2) peuvent être disposés sur la tablette ouvrante (5) et, à l'état ouvert (7), peuvent être transportés vers le bas hors du compartiment à bagages (3) par gravité à travers une ouverture (8) libérée par la tablette ouvrante (5) pour vider le compartiment à bagages (3).

2. Dispositif (1) selon la revendication 1, **caractérisé en ce qu'**il est prévu plus de deux, de préférence exactement quatre, compartiments à bagages (3) disposés verticalement l'un au-dessus de l'autre.

3. Dispositif (1) selon l'une des revendications 1 à 2, **caractérisé en ce que** les tablettes (4) de tous les compartiments à bagages (3) qui sont disposés au-dessus d'un compartiment à bagages inférieur (9) sont réalisées sous la forme de tablettes ouvrantes (5).

4. Dispositif (1) selon l'une des revendications 1 à 3, **caractérisé en ce que** ladite au moins une tablette ouvrante (5) comprend au moins un élément formant volet (10) qui, à l'état ouvert (7), est pivoté vers le bas par rapport à l'état fermé (6).

5. Dispositif (1) selon la revendication 4, **caractérisé en ce que** ladite au moins une tablette ouvrante (5) comprend exactement deux éléments formant volet (10), de préférence de taille égale.

6. Dispositif (1) selon l'une des revendications 4 à 5, **caractérisé en ce que** ledit au moins un élément formant volet (10) peut pivoter le long d'un axe de pivotement (11) qui s'étend parallèlement à un axe longitudinal (12) de l'élément formant volet (10) et est disposé dans la zone d'un bord (13) délimitant l'ouverture (8), de préférence dans la zone d'une paroi latérale (28).

7. Dispositif (1) selon l'une des revendications 1 à 6, **caractérisé en ce que** la tablette (4) d'un compartiment à bagages inférieur (9) comprend au moins un moyen de transport, en particulier une bande transporteuse (15), pour transporter les bagages (2) hors du compartiment à bagages inférieur (9) dans une direction de transport (16) ayant une composante directionnelle horizontale et pouvoir ainsi vider le compartiment à bagages inférieur (9).

8. Dispositif (1) selon l'une des revendications 1 à 7, **caractérisé en ce que** le dispositif (1) comprend une unité de commande avec laquelle au moins un moyen d'entraînement (17) peut être commandé, ladite au moins une tablette ouvrante (5) pouvant être transférée de l'état fermé (6) à l'état ouvert (7) et inversement au moyen dudit au moins un moyen d'entraînement (17).

9. Dispositif (1) selon la revendication 8, si elle dépend de la revendication 7, **caractérisé en ce que** ledit au moins un moyen de transport (15) de la tablette (4) du compartiment à bagages inférieur (9) peut également être commandé par l'unité de commande.

10. Dispositif (1) selon l'une des revendications 8 à 9, **caractérisé en ce qu'**un moyen d'entraînement (17) est prévu pour chaque tablette ouvrante (5), pouvant chacun être commandé séparément par l'unité de commande.

11. Dispositif (1) selon la revendication 10, si elle dépend de la revendication 9 et de la revendication 3, **caractérisé en ce que**, pour vider tous les compartiments à bagages (3), l'unité de commande est conçue de telle sorte qu'en commençant par le compartiment à bagages (3) qui est disposé verticalement immédiatement au-dessus du compartiment à bagages inférieur (9), les compartiments à bagages (3) sont vidés l'un après l'autre verticalement de bas en haut, chacun de ces compartiments à bagages (3) n'étant vidé que lorsqu'au moins le compartiment à bagages (3, 9) situé immédiatement en dessous a déjà été vidé et que sa tablette ouvrante (5) est à l'état fermé, à condition aussi que le compartiment à bagages (3, 9) situé au moins immédiatement en dessous présente une tablette ouvrante (5).

12. Dispositif (1) selon la revendication 11, **caractérisé en ce que**, pour vider tous les compartiments à bagages (3), l'unité de commande est conçue de telle sorte que chacun de ces compartiments à bagages (3) n'est vidé que lorsque tous les compartiments à bagages (3, 9) situés en dessous ont déjà été vidés.

13. Agencement (27) de plusieurs, de préférence d'exactement deux, dispositifs (1) selon l'une des revendications 1 à 12, dans lequel les compartiments à bagages (3) sont disposés en plusieurs colonnes (14) horizontalement côte à côte et parallèlement l'une à l'autre, chacune des colonnes (14) étant formée par un des dispositifs (1).

14. Véhicule de transport (18, 19) comprenant un dispositif (1) selon l'une des revendications 1 à 12 ou un agencement (27) selon la revendication 13.

15. Véhicule de transport (19) selon la revendication 14, **caractérisé en ce que** le véhicule de transport (19) est un véhicule de transport circulant de façon autonome ou semi-autonome.
